# EUROPEAN PATENT SPECIFICATION

(11) **EP 2 494 940 B1**
(45) Date of publication and mention of the grant of the patent: **04.04.2018**
(21) Application number: 12156871.1
(22) Date of filing: 24.02.2012
(51) Int. Cl.: A61C 13/12, B25H 1/00, A61C 9/00

(54) **Stand for dental technical material**
Ständer für zahntechnisches Material
Support pour matériau technique dentaire

(30) Priority: 03.03.2011 JP 2011046414
(43) Date of publication of application: 05.09.2012
(73) Proprietor: GC Corporation, Bunkyo-ku Tokyo 113-0033 (JP)
(72) Inventor: Noguchi, Yukie, Tokyo, 174-8585 (JP); Shinjo, Takao, Tokyo, 174-8585 (JP)
(74) Representative: Beck Greener

(56) References cited:
- DE-U1- 29 909 158
- JP-A- 2008 295 908
- JP-U- 3 140 626
- US-A1- 2008 008 982

## Description

### Technical Field

The present invention relates to a stand for a dental technical material which is used in the field of dentistry and dental technology. In particular, it relates to a stand for a dental technical material with which to efficiently and stably dispose in a polymerization device, a technical material on which a photopolymerization material and heat-polymerization material (hereinafter, collectively referred to as a "polymerization material") is put by coating or applying thereof.

### Background Art

In some cases, to make a dental prosthesis, a technical material is disposed on a dental model; and a polymerization material is put on the technical material by applying or the like, and is hardened with a polymerization device. At this time, in order to stably dispose inside the polymerization device, the dental model with the polymerization material put thereon, the dental model with which a dowel pin is provided, or a dental model with which a short rod-like member called a post is provided, is often arranged on a stand for a dental technical material which has a plurality of holes. (Hereinafter, the dowel pin and the post may be collectively referred to as a "pin".)

Patent Document 1 discloses a stand for a dental technical material (i.e. a post stand for dental technology) in accordance with a conventional example; namely a cylindrical stand for a dental technical material having a hole into which a pin (or post) for stably disposing a dental model inside a polymerization device is inserted. And this is characterized to further comprise a belt-like slit for a dowel pin on a surface having the hole.

According to this, the pin (or post) provided to the dental model is inserted into the hole in the stand for a dental technical material, enabling the stand for a dental technical material to stably hold the dental model. At this point, a technical material is arranged on the surface of the dental model, and a polymerization material is put on the technical material by applying or the like. If the dental model is disposed inside the polymerization device together with the stand for a dental technical material entirely, it is possible to stably dispose inside the polymerization device, the dental model and the polymerization material put thereon.

On the other hand, the belt-like slit for the dowel pin can be inserted with a dental model which is provided with a double-pin shaped pin called a twin pin (i.e. dowel pin). Further, even in a case of disposing a dental model with which two separate pins are provided, it is possible to easily insert the dental model by inserting each of the pins into the slit, no matter what distance the pins are at.

### Citation List

### Patent Documents

Patent Document 1: Japanese Patent Application Laid-Open No. 2008-295908

### Summary of the Invention

### Problems to be Solved by the Invention

However, in a conventional stand for a dental technical material, when a dental model is provided with a plurality of pins, it is necessary to try to appropriately select the holes to match the positions of the pins and the holes, thus sometimes requiring time and effort. The stand for a dental technical material disclosed in Patent Document 1 has increased flexibility in arranging a dental model provided with a plurality of pins, by combination of the hole and the slit, enabling arrangement of the dental model easier. However, there is limitation to this as well; that is, there is still difficulty in the arrangement as more pins are disposed on one dental model.

In view of hardening the polymerization material more efficiently, and in view that it is efficient to dispose a plurality of dental models on one stand for a dental technical material, a stand for a dental technical material is convenient on which it is possible to dispose a dental model with more flexibility.

Accordingly, an objective of the present invention is to provide a stand for a dental technical material which is capable of increasing flexibility and reducing difficulty in arranging of a dental model.

### Means for Solving the Problems

Hereinafter, the present invention will be described.

A first aspect of the present invention is a stand for a dental technical material, for attaching thereto a dental model holding a dental technical material, the dental model being provided with a pin, wherein the stand for a dental technical material comprises a body; the body is provided with a holding device which holds the pin; and the holding device is deformable.

A second aspect of the invention is a stand for a dental technical material according to the first aspect, wherein the holding device includes at least a plurality of holes and/or a holding projection; the plurality of holes are capable of holding a pin by inserting the pin thereinto; a shape of the holes is deformable; the holding projection has a plurality of projections which are capable of holding a pin by sandwiching the pin therebetween; and a shape of the projections is deformable.

A third aspect of the invention is a stand for a dental technical material according to the first or second aspect, wherein the holding device and the body have a heat-resistant temperature of 80°C or more.

A fourth aspect of the present invention is an apparatus for manufacturing a dental prosthesis comprising: a stand for a dental technical material according to any one of the first to third aspects; and a dental model holding a dental technical material and being provided with a pin, wherein the holding device is deformed to hold the pin therein, by which the dental model is held in the stand for a dental technical material.

A fifth aspect of the present invention is a method for using a stand for a dental technical material which stand is for attaching thereto a dental model holding a dental technical material and being provided with a pin; wherein the stand for a dental technical material comprises a body; the body is provided with a holding device which holds the pin; the holding device is deformable; and the holding device is deformed to hold the pin, by which the dental model is held in the stand for a dental technical material.

A sixth aspect of the present invention is a method for using a stand for a dental technical material according to the fifth aspect, wherein the holding device includes at least a plurality of holes and/or a holding projection; the plurality of holes hold the pin by inserting the pin thereinto; a shape of the holes is deformable; the holding projection has a plurality of projections which hold the pin by sandwiching the pin therebetween; a shape of the projections is deformable; and the pin is held in at least the holes and/or the holding projection, by which the dental model is held in the stand for a dental technical material.

A seventh aspect of the present invention is a method for manufacturing a dental prosthesis, comprising: holding in the stand for a dental technical material, the dental model on which the dental technical material is disposed, by employing the method for using a stand for a dental technical material according to the fifth or sixth aspect; and arranging in a polymerization device, the stand for a dental technical material holding the dental model, to polymerize a polymerization material disposed onto the dental technical material.

### Effects of the Invention

With the stand for a dental technical material of the present invention, it is possible to increase flexibility and reduce difficulty in arranging a dental model.

### Brief Description of the Drawings

Fig. 1 is a plan view of a stand for a dental technical material in accordance with a first embodiment.
Fig. 2 is a cross-sectional view taken along II-II in Fig. 1.
Fig. 3 is a view illustrating manufacturing of a dental prosthesis.
Fig. 4 is a view illustrating a stand for a dental technical material in accordance with a second embodiment: Fig. 4A is a plan view; and Fig. 4B is an end view showing a cross section.
Fig. 5 is a perspective view of a stand for a dental technical material in accordance with a third embodiment.
Fig. 6 is a view illustrating a stand for a dental technical material in accordance with a fourth embodiment: Fig. 6A is a plan view; and Fig. 6B is an end view showing a cross section.
Fig. 7 is a view illustrating a stand for a dental technical material in accordance with a fifth embodiment: Fig. 7A is a plan view; and Fig. 7B is a cross-sectional view.

### Description of Modes for Carrying Out the Invention

The above described functions and benefits of the present invention will be apparent from the following modes for carrying out the invention. Hereinafter, the present invention will be described based on the embodiments shown in the accompanying drawings. However, the invention is not limited to the embodiments. In each of the drawings, the same reference numerals may be omitted for easy viewing.

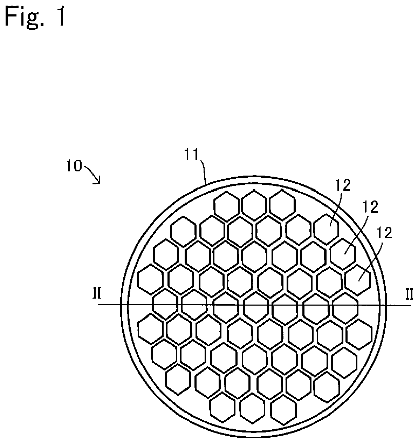

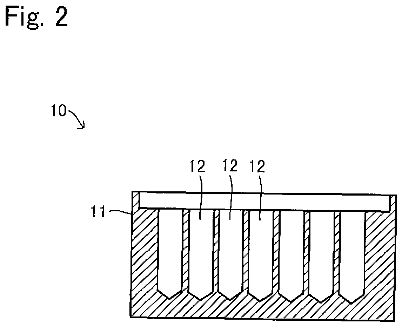

Fig. 1 is a plan view of a stand 10 for a dental technical material in accordance with a first embodiment. Fig. 2 is a cross-sectional view taken along II-II in Fig. 1. The stand 10 for a dental technical material will be explained with reference to Figs. 1 and 2.

As can be seen from Figs. 1 and 2, the stand 10 for a dental technical material comprises a body 11, which has a cylindrical shape as a whole. There are a plurality of holes 12 as a holding device which extend from a top face of the body 11 in parallel with its cylindrical axis. In the present embodiment, the holes 12 do not reach the other end portion of the body in a direction of its cylindrical axis, and thus the holes do not penetrate (through the body); however, the holes may penetrate without special restrictions to the above configuration.

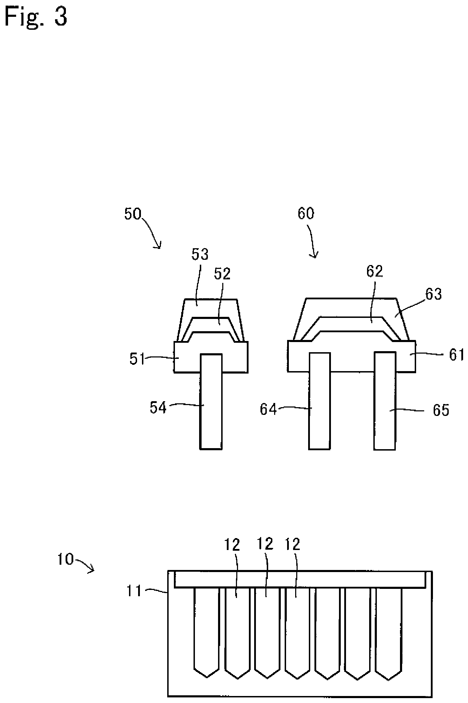

That is, in the present embodiment, the holes 12 function as a holding device for holding pins 54, 64, 65 (see Fig. 3) provided to a below-described dental model. It is a wall face of the body 11 provided with the holes 12 that actually holds the pins 54, 64, 65; however, herein the holes including the wall face of the body 11 are described as the holding device.

In the present embodiment, the hole 12 has a hexagonal cross section, which is orthogonal to the cylindrical axis. This enables obtaining an appropriate contact area of the pins 54, 64, 65 and the body 11 (or the wall face of the holes 12) when the pins 54, 64, 65 (see Fig. 3) are inserted into the holes 12 as described below. Therefore, it becomes possible to easily insert and remove the pins 54, 64, 65 while securely holding the dental model. However, the shape of the hole is not limited to this; it may be circular, oval, in other polygonal shapes, and in a groove-like shape elongated on one side.

Further, in the present embodiment, the hole 12 has the same size along the direction of the cylindrical axis, except for the lower end portion of the hole. The size of the hole is not limited to this; and the hole may be shaped tapered in a depth direction. With this configuration, a large contact area (of the pin and the hole) can be obtained even when a pin shaped tapered is used, and a high holding ability can be maintained. Furthermore, in manufacturing the stand 10 for a dental technical material, it becomes possible to improve its mold releasability.

Herein, the cross section of each of the holes 12 which is orthogonal to a longitudinal direction of the holes (i.e. the cross section shown in Fig. 1) preferably has a perimeter of 10 mm or more. Also, a diameter equivalent to a value obtained by dividing by the perimeter, the area of the cross section of each of the holes 12 which is orthogonal to the longitudinal direction of the holes, is preferably 10 mm or less. By this, even when a small-sized dental model is disposed, it is possible to prevent the dental model from falling into the hole 12 entirely.

In addition, the body 11 comprising the holes 12 as a holding device is made of a soft material, thus the body being elastic. This enables deformation of the shape of the hole 12; thereby, when there is a gap between the position of the pins 54, 64, 65 and that of the holes 12, it is possible to adjust the position gap by deforming the holes 12, and to match the positions of the pins 54, 64, 65 and the holes 12.

That is to say, in disposing a plurality of dental models on the stand for a dental technical material, the shape of the holes can be deformed within a range of elastic deformation of the holes (or body) so as to insert the pins thereinto. By this, it becomes possible to dispose on the stand 10 for a dental technical material, a dental model which cannot be disposed on the conventional stand for a dental technical material.

Accordingly, it is possible to improve the flexibility and the easiness in arranging a dental model on the stand for a dental technical material. Further, with the high flexibility in arranging a dental model, it becomes more convenient in arranging a plurality of dental models on one stand for a dental technical material, or in arranging a dental model provided with a plurality of pins.

In this way, the hole 12 of the body 11 should be deformed within a range of its elasticity so as to match the position of the pins 54, 64, 65. Specifically, the body 11 is preferably made of resin or rubber having a Young's modulus of 5 Gpa or less. And examples of the materials include silicone; nitrile rubber; fluoro-rubber; polypropylene; polyethylene terephthalate; polycarbonate; polyamide; and fluororesin. Further, for the purpose of improving the elasticity, heat resistance, impact resistance and the like, a glass fiber may be contained in the resin; or two or more kinds of resin may be mixed.

Herein, in order to more easily deform such holes 12, a thickness of the body 11 existing between the holes 12 which are adjacent to one another is preferably made small within a range that can secure a holding ability.

Further, as can be seen from Fig. 1, the holes 12 may be arranged with an equal pitch to be closest to one another. With this arrangement, it is possible to arrange a number of holes 12, thereby further enhancing the flexibility in the arrangement of a dental model. In some of the conventional stands for a dental technical material, the holes are purposefully arranged randomly in order to enhance the flexibility in the arrangement of a dental model. However, since, with the present invention, the holes 12 can be appropriately deformed, it is possible to secure enough flexibility in the arrangement of a dental model even if the holes are arranged with an equal spacing. Additionally, arranging the holes 12 with an equal spacing in this way makes it easy to make the holes.

Furthermore, the body 11 comprising the holes 12 as a holding device is made of a light-transmissive material. This makes it possible to transmit a light through the body 11 to irradiate with the light, a polymerization material on a dental model which is disposed on the stand for a dental technical material, obliquely from the lower side as well, thereby enabling irradiation of the light to an area where the light cannot reach with the conventional stand for a dental technical material. Heretofore, when there is an area where the light cannot reach, it has been necessary to change a position of the dental model and to re-irradiate the light thereto. In contrast, the stand 10 for a dental technical material can reduce the number of times at which the light needs to be re-irradiated. Especially, when a plurality of dental models are disposed, there tends to be more areas where the light cannot reach; however, with the stand 10 for a dental technical material, it is possible to obtain a larger area that the light reaches than ever before, because of the light that is transmitted through the body 11.

Therefore, efficient polymerization can be carried out.

A specific transmittance is not particularly limited; however, when making a component having the same material and height as those of the body 11 (, not making the hole 12), the transmittance in its height direction is preferably 5% or more. Especially in a case of performing photopolymerization, a polymerization material is often hardened with a light having a wavelength of approximately 470 nm; thus at least the transmittance in a wavelength of 470 nm is preferably 5% or more in the height direction.

On the other hand, the material used for the stand 10 for a dental technical material preferably has a heat-resistant temperature of 80°C or more. A polymerization material of a thermosetting type is usually hardened at a temperature of 80°C or more, so by setting the heat-resistant temperature at 80°C or more, the stand 10 for a dental technical material can be used even at a time of performing thermosetting polymerization.

Next, one example of making a dental prosthesis using the stand 10 for a dental technical material will be described. Fig. 3 shows an illustrative view.

Dental models 51, 61 having a shape of a dental arch are made with a plaster or the like at a dental clinic etc. Then, in the dental models 51, 61, a tooth model portion on which to make a dental prosthesis is processed so that the portion can be removed alone without ruining a positional relation with the other portions. Further, at this point, pins 54, 64, 65 are inserted in a standing manner, into an opposite side of the tooth model made, in the dental models 51, 61.

On the other hand, in the plaster models 51, 61 on a surface of the tooth model portion on which to make a dental prosthesis, technical materials 52, 62 made of metal or the like are disposed. And polymerization materials 53, 64 are further put thereon by applying or the like.

Separable and removable models 50, 60 thus formed are fixed to the stand 10 for a dental technical material. Specifically, the models are fixed to the stand by inserting the pins 54, 64, 65 respectively into the different holes 12, 12, 12 of the stand 10 for a dental technical material.

Since the body 11 of the stand 10 for a dental technical material has excellent elasticity, it is possible to match the positions of the pins 54, 64, 65 and the holes 12, 12, 12, when inserting the pins 54, 64, 65 into the holes. With the stand 10 for a dental technical material, it may become possible to easily dispose a model which has been difficult to dispose on the conventional stand for a dental technical material. Further, in terms of the position of the hole, there has been a large limitation heretofore in arranging on the stand for a dental technical material, a model that comprises two pins 64, 65, like the separable and removable model 60. In contrast, the stand 10 for a dental technical material is capable of alleviating such a limitation as this to a large degree.

After fixing the separable and removable models 50, 60 to the stand 10 for a dental technical material, they are disposed inside a polymerization device to have the polymerization material hardened by irradiating light or by heating; thereby a dental prosthesis is made. Especially, in a case when the polymerization material is a photopolymerization material, and is hardened with a photopolymerization device, if the body 11 of the stand 10 for a dental technical material is made of a light-transmissive material, the light transmitted through the body 11 also becomes the light for hardening the photopolymerization material, thereby enabling improvement of the polymerization efficiency. Arranging a plurality of the separable and removable models 50, 60 sometimes creates an area where it is difficult to irradiate light; thus the body 11 made of a light-transmissive material can prevent this.

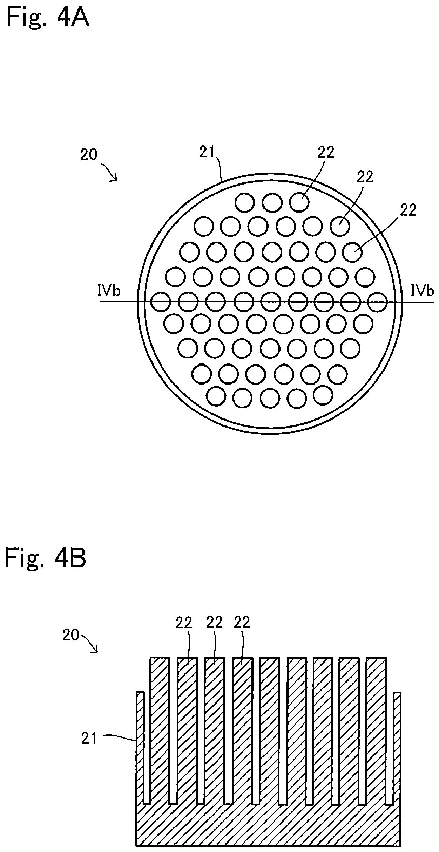

Fig. 4 shows a stand 20 for a dental technical material in accordance with a second embodiment. Fig. 4A is a plan view; and Fig. 4B is a cross-sectional view (end view) taken along IVb-IVb in Fig 4A.

As can be seen from Figs. 4A and 4B, the stand 20 for a dental technical material comprises: a body 21 which is in a cylindrical shape having a bottom base; and a holding projection 22 as a holding device which is arranged to stand in a manner extending toward an opening from the bottom base of the body 21 through inside the cylindrical body. That is, in the present embodiment, the holding projection 22 functions as a holding device for holding the pins 54, 64, 65 (see Fig. 3) of the above described separable and removable models 50, 60. Specifically, the pins 54, 64, 65 are sandwiched and held between a plurality of the holding projections 22.

In the present embodiment, the holding projection 22 has a circular cross section which is orthogonal to the cylindrical axis of the body 21. In specific, the holding projection 22 is in a cylindrical shape. This enables obtaining an appropriate contact area of the pins 54, 64, 65 and the holding projections 22 when the pins 54, 64, 65 (see Fig. 3) are inserted between the plurality of the holding projections 22. Accordingly, it becomes possible to easily insert and remove the pins 54, 64, 65 while securely holding the dental model on which a polymerization material is disposed. However, the cross-sectional shape of the holding projection is not limited to this; it may be oval, triangular, rectangular, or in other polygonal shapes, depending on the necessity.

Further, in the present embodiment, the cylindrical-shaped holding projection is shown; however, it may be shaped tapered along a longitudinal direction. With this shape, it becomes easy to insert and remove the dental model.

Not all of the plurality of the holding projections need to have the same cross-sectional shapes. They may have different cross-sectional shapes depending on the position: for example the cross-sectional shapes on the right half of the plan view may be cylindrical, and those on the left half may be triangle pole-shaped.

Herein, a spacing among the plurality of the holding projections 22 is not particularly limited; however, a gap that enables holding at least the pins 54, 64, 65 needs to be formed.

In addition, the holding projection 22 is made of a soft material, thus being elastic. This enables deformation of the shape of the holding projection 22; thereby, when there is a gap between the position of the pins 54, 64, 65 and that of the holding projections 22, it is possible to adjust the position gap by deforming the holding projections 22, and to match the positions of the pins 54, 64, 65 and the holding projections 22.

That is to say, the stand 20 for a dental technical material also exerts the same effects as those of the stand 10 for a dental technical material.

Furthermore, a preferable material and a preferable Young's modulus of the holding projection 22, and the light transparency and heat resistance of the body 21 and the holding projection 22 are the same as those in the stand 10 for a dental technical material.

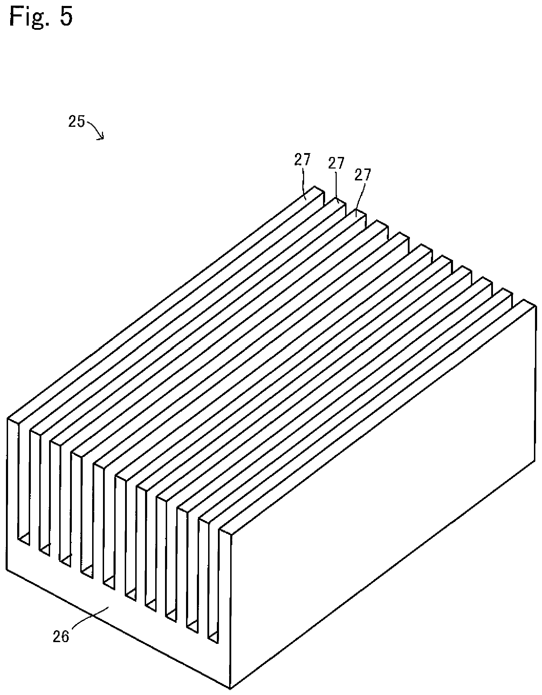

Fig. 5 is a perspective view of a stand 25 for a dental technical material in accordance with the third embodiment; and shows another example of a stand for a dental technical material comprising a holding projection as a holding device. In the stand 25 for a dental technical material, a plurality of plate-like holding projections 27 are arranged to stand from one face of a substrate 26. The plurality of the holding projections 27 are aligned with a predetermined spacing in such a manner that they face to one another. And the holding projections 27 are made of a soft material, and are capable of holding a dental model by sandwiching the pins 54, 64, 65 therebetween.

Therefore, the stand 25 for a dental technical material also exerts the same effects as those of the stand 20 for a dental technical material.

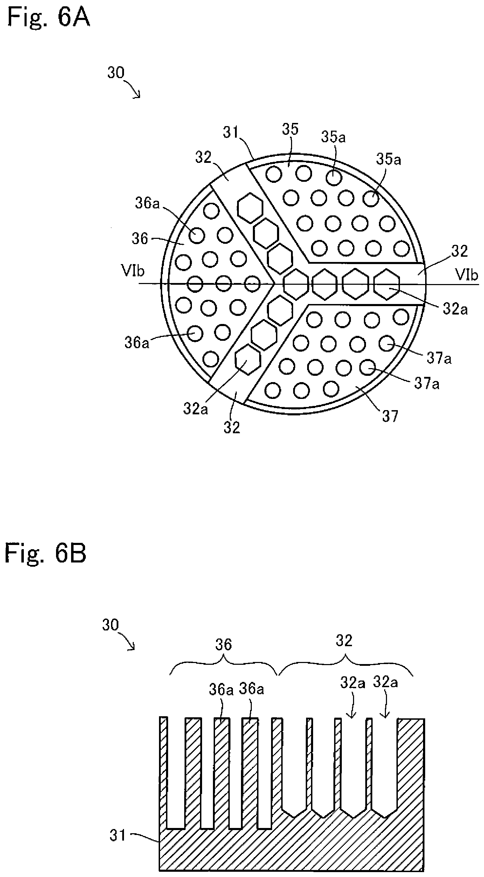

Fig. 6 shows a stand 30 for a dental technical material in accordance with the fourth embodiment. Fig. 6A is a plan view; and Fig. 6B is a cross-sectional view (end view) taken along VIb-VIb in Fig 6A.

As can be seen from Figs. 6A and 6B, the stand 30 for a dental technical material comprises both the holes 12 provided to the stand 10 for a dental technical material of the first embodiment, and the holding projections 22 provided to the stand 20 for a dental technical material of the second embodiment. Details are as follows.

The stand 30 for a dental technical material comprises: a body 31, which is in a cylindrical shape having a bottom base; and three plate-like standing walls 32, which are arranged to stand from the bottom base of the body 31, to extend from the cylindrical axis to the inner surface of the cylindrical body, and to separate inside the cylindrical body. The three standing walls 32 form three spaces 35, 36, 37, which are surrounded by the standing walls 32 and the inner surfaces of the cylindrical body.

A plurality of holes 32a as a holding device are provided to the end faces of the standing walls 32 in such a manner as digging inside the standing walls 32 in parallel with a direction of the cylindrical axis of the body 31. The holes 32a may be arranged in the same manner as the holes 12 of the above described stand 10 for a dental technical material of the first embodiment.

A plurality of holding projections 35a, 36a, 37a as a holding device are arranged to stand from the bottom in the spaces 35, 36, 37, in a manner extending toward a cylindrical opening of the body 31. The holding projections 35a, 36a, 37a may be arranged in the same manner as the holding projections 22 of the above described stand 20 for a dental technical material of the second embodiment.

That is to say, in the present embodiment, the holes 32a (the wall surfaces of the holes 32a in the standing walls 32), and the holding projections 35a, 36a, 37a function as a holding device for holding the pins 54, 64, 65 (see Fig. 3) of the above described separable and removable models 50, 60. Specifically, the pins 54, 64, 65 are held by being inserted into the holes 32a or by being sandwiched by the holding projections 35a, 36a, 37a.

In this way, by comprising different kinds of holding devices, it is possible to handle various kinds of dental models.

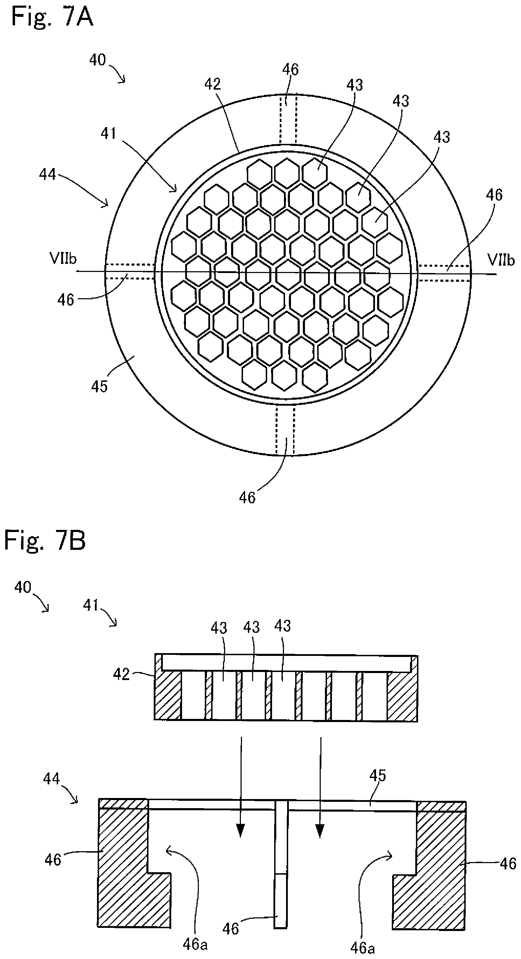

Fig. 7 shows a stand 40 for a dental technical material in accordance with the fifth embodiment. Fig. 7A is a plan view; and Fig. 7B is a cross-sectional view taken along VIIb-VIIb in Fig 7A. In Fig. 7B, the components are shown separately for the purpose of easy understanding.

As can be seen from Figs. 7A and 7B, the stand 40 for a dental technical material comprises: a holder 41 for holding a dental model; and a receiver 44 for receiving the holder.

As to a basic configuration of the holder 41 for holding a dental model, the configurations of the stands 10, 20, 25, 30 for a dental technical material described above can be applied. In the present embodiment, the configuration of the holder 41 which is closest to that of the stand 10 for a dental technical material among the other configurations, will be illustrated.

The holder 41 for holding a dental model comprises a body 42, which has a cylindrical shape as a whole, and a length of which in an axial direction is shorter than its diameter. And the body 42 is provided with a plurality of holes 43 as a holding device, which extends in parallel with the cylindrical axis. In the present embodiment, the holes 43 penetrate through an end portion of the other side in the direction of the cylindrical axis.

That is to say, in the present embodiment, the holes 43 function as a holding device for holding the pins 54, 64, 65 (see Fig. 3) provided to a dental model. It is a wall face of the body 42 provided with the holes 43 that actually holds the pins 54, 64, 65; however, herein the holes 43 including the wall face of the body 42 are described as a holding device.

In addition, the configuration of the holes 43 of the holder 41 for holding a dental model, and a material and the like of the holder 41 for holding a dental model are the same as those in the stand 10 for a dental technical material.

The receiver 44 for receiving a holder comprises: a base material 45, which is an annular plate; and four legs 46, which are arranged on one surface of the base material 45, with a predetermined spacing.

The base material 45 has an annular inner diameter which is approximately the same as an outer diameter of the holder 41 for holding a dental model; and the holder 41 for holding a dental model can be inserted into the annular hole. Further, the four plate-like legs 46 are disposed longitudinally on one surface of the base material 45, in such a manner as being hung down along the surface with a spacing of an angle of 90 degrees. As can be seen from Fig. 7B, the legs 46 have a cutout 46a; and the cutout 46a is arranged so that the holder 41 for holding a dental model is received by the cutout 46a.

Accordingly, the receiver 44 for receiving a holder is capable of holding the holder 41 for holding a dental model by inserting the holder inside the base material 45, and by receiving the holder with the cutouts 46a of the legs 46, as shown by the linear arrow in Fig. 7B.

With this stand 40 for a dental technical material it is possible to attain the same effects as those of the stand 10 for a dental technical material, and also possible to adequately replace the holder 41 for holding a dental model. Namely, the receiver 44 for receiving a holder can be used for a long period of time with its high strength. And the holder 41 for holding a dental model having a complicated shape can be kept small and thin, and thus be easily manufactured; thereby enabling providing a stand for dental technical material at a low price.

Herein, a material forming the receiver 44 for receiving a holder is not particularly limited; however, the material is preferably excellent in light transparency, and /or excellent in heat resistance having a heat resistant temperature of 80°C or more.

### Description of the Reference Numerals

- 10: stand for a dental technical material
- 11: body
- 12: hole (holding device)
- 20: stand for a dental technical material
- 21: body
- 22: holding projection (holding device)
- 25: stand for a dental technical material
- 26: substrate
- 27: holding projection (holding device)
- 30: stand for a dental technical material
- 32a: hole (holding device)
- 35a, 36a, 37a: holding projection (holding device)
- 40: stand for a dental technical material
- 41: holder for holding a dental model
- 44: receiver for receiving a holder

## Claims

1. A stand (10, 20, 25, 30, 40) for a dental technical material, for attaching thereto a dental model (51, 61) holding a dental technical material (52, 63), the dental model (51, 61) being provided with a pin (54, 64, 65),
wherein the stand for a dental technical material comprises a body (11, 21, 31, 42); the body is provided with a holding device which holds the pin; the holding device is elastically deformable and the body and the holding device are made of light transmissive material.

2. A stand (10, 30, 40) for a dental technical material according to claim 1, wherein the holding device includes a plurality of holes (12, 32a, 43);
the plurality of holes (12, 32a) are capable of holding the pin (54, 64, 65) by inserting the pin thereinto; and
the shape of the holes (12, 32a) is elastically deformable.

3. A stand for a dental technical material according to claim 1 or 2, wherein the holding device includes a holding projection;
the holding projection has a plurality of projections (22, 27, 35a, 36a, 37a) which are capable of holding the pin (54, 61, 65) by sandwiching the pin therebetween; and
the shape of the projections is elastically deformable.

4. A stand (10, 20, 25, 30, 40) for a dental technical material according to any one of claims 1 to 3, wherein the holding device and the body (11, 21, 31, 42) have a heat-resistant temperature of 80°C or more.

5. An apparatus for manufacturing a dental prosthesis comprising:
a stand (10, 20, 25, 30, 40) for a dental technical material according to any one of claims 1 to 4; and
a dental model (51, 61) holding a dental technical material (52, 62) and being
provided with a pin (54, 64, 65),
wherein the holding device is elastically deformed to hold the pin therein, by which the dental model (51, 62) is held in the stand (10, 20, 25, 30, 40) for a dental technical material.

6. A method for using a stand (10, 20, 25, 30, 40) for a dental technical material, which stand (10, 20, 25, 30, 40) is for attaching thereto a dental model (51, 61) holding a dental technical material (52, 62) and being provided with a pin (54, 64, 65);
wherein the stand (10, 20, 25, 30, 40) for a dental technical material comprises a body (11, 21, 31, 42);
the body (11, 21, 31, 42) is provided with a holding device which holds the pin (54, 64, 65);
the holding device is elastically deformable; the body and the holding device are made of light transmissive material; and
the method comprises elastically deforming the holding device to hold the pin (54, 64, 65), and thereby holding the dental model (51, 61) in the stand (10, 20, 25, 30, 40) for a dental technical material.

7. A method for using a stand (10, 30, 40) for a dental technical material according to claim 6, wherein the holding device includes a plurality of holes (12, 32a, 43);
the plurality of holes (12, 32a, 43) hold the pin (54, 64, 65) by inserting the pin
thereinto;
the shape of the holes (12, 32a, 43) is elastically deformable; and
the pin (54, 64, 65) is held in the holes , thereby holding the dental model (51, 61) in the stand (10, 30, 40) for a dental technical material.

8. A method for using a stand (20, 25, 30) for a dental technical material according to claim 6 or 7, wherein the holding device includes a holding projection;
the holding projection has a plurality of projections (22, 27, 35a, 36a, 37a) which hold the pin (54, 64, 65) by sandwiching the pin therebetween;
the shape of the projections is elastically deformable; and
the pin (54, 64, 65) is held in the holding projection, thereby holding
the dental model (51, 61) in the stand (20, 25, 30) for a dental technical material.

9. A method for manufacturing a dental prosthesis, by employing the method for using a stand (10, 20, 25, 30, 40) for a dental technical material according to any one of claims 6 to 8, comprising:
holding in the stand (10, 20, 25, 30, 40) the dental model (51, 61) on which the dental technical material (52, 62) is disposed; and arranging in a polymerization device, the stand (10, 20, 25, 30, 40) holding the dental model (51, 61), to polymerize a polymerization material disposed onto the dental technical material.

## Patentansprüche

1. Stativ (10, 20, 25, 30, 40) für ein dentaltechnisches Material, um darauf ein Dentalmodell (51, 61) anzubringen, das ein dentaltechnisches Material (52, 63) hält, wobei das Dentalmodell (51, 61) mit einem Stift (54, 64, 65) versehen ist,
wobei das Stativ für ein dentaltechnisches Material einen Korpus (11, 21, 31, 42) umfasst; wobei der Korpus mit einer Haltevorrichtung versehen ist, die den Stift hält; wobei die Haltevorrichtung elastisch verformbar ist und der Korpus und die Haltevorrichtung aus lichtdurchlässigem Material bestehen.

2. Stativ (10, 30, 40) für ein dentaltechnisches Material nach Anspruch 1, wobei die Haltevorrichtung eine Vielzahl von Löchern (12, 32a, 43) beinhaltet;
wobei die Vielzahl von Löchern (12, 32a) in der Lage sind, den Stift (54, 64, 65) zu halten, indem der Stift dort eingeführt wird; und
die Form der Löcher (12, 32a) elastisch verformbar ist.

3. Stativ für ein dentaltechnisches Material nach Anspruch 1 oder 2, wobei die Haltevorrichtung einen Haltevorsprung beinhaltet;
wobei der Haltevorsprung eine Vielzahl von Vorsprüngen (22, 27, 35a, 36a, 37a) aufweist, die in der Lage sind, den Stift (54, 64, 65) zu halten, indem sie den Stift zwischen sich einklemmen; und
die Form der Vorsprünge elastisch verformbar ist.

4. Stativ (10, 20, 25, 30, 40) für ein dentaltechnisches Material nach einem der Ansprüche 1 bis 3, wobei die Haltevorrichtung und der Korpus (11, 21, 31, 42) eine Hitzebeständigkeitstemperatur von 80 °C oder mehr aufweisen.

5. Vorrichtung zum Herstellen einer Dentalprothese, umfassend:
ein Stativ (10, 20, 25, 30, 40) für ein dentaltechnisches Material nach einem der Ansprüche 1 bis 4; und
ein Dentalmodell (51, 61), das ein dentaltechnisches Material (52, 62) hält und mit einem Stift (54, 64, 65) versehen ist,
wobei die Haltevorrichtung elastisch verformt ist, um den Stift darin zu halten, wodurch das Dentalmodell (51, 61) auf dem Stativ (10, 20, 25, 30, 40) für ein dentaltechnisches Material gehalten wird.

6. Verfahren zum Gebrauch eines Stativs (10, 20, 25, 30, 40) für ein dentaltechnisches Material, wobei das Stativ (10, 20, 25, 30, 40) ausgelegt ist, um ein Dentalmodell (51, 61) daran zu befestigen, das ein dentaltechnisches Material (52, 62) hält und mit einem Stift (54, 64, 65) versehen ist;
wobei das Stativ (10, 20, 25, 30, 40) für ein dentaltechnisches Material einen Korpus (11, 21, 31, 42) umfasst;
wobei der Korpus (11, 21, 31, 42) mit einer Haltevorrichtung versehen ist, die den Stift (54, 64, 65) hält;
wobei die Haltevorrichtung elastisch verformbar ist; wobei der Korpus und die Haltevorrichtung aus lichtdurchlässigem Material bestehen; und
das Verfahren elastisches Verformen der Haltevorrichtung zum Halten des Stifts (54, 64, 65) und damit Halten des Dentalmodells (51, 61) auf dem Stativ (10, 20, 25, 30, 40) für ein dentaltechnisches Material umfasst.

7. Verfahren zum Gebrauch eines Stativs (10, 30, 40) für ein dentaltechnisches
Material nach Anspruch 6, wobei die Haltevorrichtung eine Vielzahl von Löchern (12, 32a, 43) beinhaltet;
wobei die Vielzahl von Löchern (12, 32a, 43) den Stift (54, 64, 65) halten, indem der Stift dort eingeführt wird;
die Form der Löcher (12, 32a, 43) elastisch verformbar ist; und
der Stift (54, 64, 65) in den Löchern gehalten wird, wodurch das Dentalmodell (51, 61) auf dem Stativ (10, 30, 40) für ein dentaltechnisches Material gehalten wird.

8. Verfahren zum Gebrauch eines Stativs (20, 25, 30) für ein dentaltechnisches Material nach Anspruch 6 oder 7, wobei die Haltevorrichtung einen Haltevorsprung beinhaltet;
wobei der Haltevorsprung eine Vielzahl von Vorsprüngen (22, 27, 35a, 36a, 37a) aufweist, die den Stift (54, 64, 65) halten, indem sie den Stift zwischen sich einklemmen;
die Form der Vorsprünge elastisch verformbar ist; und
der Stift (54, 64, 65) in dem Haltevorsprung gehalten wird, wodurch das Dentalmodell (51, 61) auf dem Stativ (20, 25, 30) für ein dentaltechnisches Material gehalten wird.

9. Verfahren zur Herstellung einer Dentalprothese, unter Verwendung des Verfahrens zum Gebrauch eines Stativs (10, 20, 25, 30, 40) für ein dentaltechnisches Material nach einem der Ansprüche 6 bis 8, umfassend das Halten auf dem Stativ (10, 20, 25, 30, 40) des Dentalmodells (51, 61), auf das das dentaltechnische Material (52, 62) aufgebracht wird; und
Anordnen in einer Polymerisationsvorrichtung, wobei das Stativ (10, 20, 25, 30, 40) das Dentalmodell (51, 61) hält, um ein Polymerisationsmaterial zu polymerisieren, das auf dem dentaltechnischen Material aufgebracht ist.

## Revendications

1. Support (10, 20, 25, 30, 40) pour un matériau technique dentaire, permettant de fixer sur celui-ci un modèle dentaire (51, 61) maintenant un matériau technique dentaire (52, 63), ledit modèle dentaire (51, 61) étant équipé d'une broche (54, 64, 65),
ledit support pour un matériau technique dentaire comprenant un corps (11, 21, 31, 42) ; ledit corps étant équipé d'un dispositif de maintien maintenant la broche ; ledit dispositif de maintien étant déformable élastiquement et ledit corps et ledit dispositif de maintien étant constitués d'un matériau transmettant la lumière.

2. Support (10, 30, 40) pour un matériau technique dentaire selon la revendication 1, ledit dispositif de maintien comprenant une pluralité de trous (12, 32a, 43) ;
ladite pluralité de trous (12, 32a) étant capables de maintenir la broche (54, 64, 65) en insérant la broche à l'intérieur de ceux-ci ; et
la forme des trous (12, 32a) étant déformable élastiquement.

3. Support pour un matériau technique dentaire selon la revendication 1 ou 2, ledit dispositif de maintien comprenant une partie saillante de maintien ;
ladite partie saillante de maintien possédant une pluralité de parties saillantes (22, 27, 35a, 36a, 37a) capables de maintenir la broche (54, 64, 65) en intercalant la broche entre celles-ci ; et
la forme des parties saillantes étant déformable élastiquement.

4. Support (10, 20, 25, 30, 40) pour un matériau technique dentaire selon l'une quelconque des revendications 1 à 3, ledit dispositif de maintien et ledit corps (11, 21, 31, 42) possédant une température de résistance à la chaleur supérieure ou égale à 80°C.

5. Appareil permettant la fabrication d'une prothèse dentaire comprenant :
un support (10, 20, 25, 30, 40) pour un matériau technique dentaire selon l'une quelconque des revendications 1 à 4 ; et
un modèle dentaire (51, 61) maintenant un matériau technique dentaire (52, 62) et étant équipé d'une broche (54, 64, 65),
ledit dispositif de maintien étant déformé élastiquement afin de maintenir la broche dans celui-ci et par lequel le modèle dentaire (51, 61) est maintenu dans le support (10, 20, 25, 30, 40) pour un matériau technique dentaire.

6. Procédé pour l'utilisation d'un support (10, 20, 25, 30, 40) pour un matériau technique dentaire, ledit support (10, 20, 25, 30, 40) permettant de fixer sur celui-ci un modèle dentaire (51, 61) maintenant un matériau technique dentaire (52, 62) et étant équipé d'une broche (54, 64, 65) ;
ledit support (10, 20, 25, 30, 40) pour un matériau technique dentaire comprenant un corps (11, 21, 31, 42) ;
ledit corps (11, 21, 31, 42) étant équipé d'un dispositif de maintien maintenant la broche (54, 64, 65) ;
ledit dispositif de maintien étant déformable élastiquement ; ledit corps et ledit dispositif de maintien étant constitués de matériau transmettant la lumière ; et
ledit procédé comprenant une déformation de façon élastique du dispositif de maintien pour maintenir la broche (54, 64, 65) et ainsi maintenir le modèle dentaire (51, 61) dans le support (10, 20, 25, 30, 40) pour un matériau technique dentaire.

7. Procédé pour l'utilisation d'un support (10, 30, 40) pour un matériau technique
dentaire selon la revendication 6, ledit dispositif de maintien comprenant une pluralité de trous (12, 32a, 43) ;
ladite pluralité de trous (12, 32a, 43) maintenant la broche (54, 64, 65) en insérant la broche dans ceux-ci ;
la forme des trous (12, 32a, 43) étant déformable élastiquement ; et
ladite broche (54, 64, 65) étant maintenue dans les trous, maintenant ainsi le modèle dentaire (51, 61) dans le support (10, 30, 40) pour un matériau technique dentaire.

8. Procédé pour l'utilisation d'un support (20, 25, 30) pour un matériau technique dentaire selon la revendication 6 ou 7, ledit dispositif de maintien comprenant une partie saillante de maintien ;
ladite partie saillante de maintien possédant une pluralité de parties saillantes (22, 27, 35a, 36a, 37a) maintenant la broche (54, 64, 65) en intercalant la broche entre celles-ci ;
la forme des parties saillantes étant déformable élastiquement ; et ladite broche (54, 64, 65) étant maintenue dans la partie saillante, maintenant ainsi le modèle dentaire (51, 61) dans le support (20, 25, 30) pour un matériau technique dentaire.

9. Procédé permettant la fabrication d'une prothèse dentaire, mettant en oeuvre le procédé pour l'utilisation d'un support (10, 20, 25, 30, 40) pour un matériau technique dentaire selon l'une quelconque des revendications 6 à 8, comprenant :
le maintien dans le support (10, 20, 25, 30, 40) du modèle dentaire (51, 61) sur lequel le matériau technique dentaire (52, 62) est disposé ; et
l'agencement dans un dispositif de polymérisation, du support (10, 20, 25, 30, 40) maintenant le modèle dentaire (51, 61) afin de polymériser un matériau de polymérisation disposé sur le matériau technique dentaire.
